# EUROPÄISCHE PATENTSCHRIFT

(11) **EP 1 516 111 B1**
(45) Veröffentlichungstag und Bekanntmachung des Hinweises auf die Patenterteilung: **20.08.2008**
(21) Anmeldenummer: 02794974.2
(22) Anmeldetag: 06.12.2002
(51) Int. Cl.: F02D 9/10, F16K 1/22

(54) **BIEGEMOMENTOPTIMIERTES DROSSELKLAPPENELEMENT**
THROTTLE VALVE ELEMENT WITH AN OPTIMAL FLEXURAL TORQUE
ELEMENT DE PAPILLON DES GAZ A COUPLE DE FLEXION OPTIMISE

(30) Priorität: 10.06.2002 DE 10225671
(43) Veröffentlichungstag der Anmeldung: 23.03.2005
(73) Patentinhaber: ROBERT BOSCH GMBH, 70442 Stuttgart (DE)
(72) Erfinder: MICHELS, Markus, 70178 Stuttgart (DE)
(74) Vertreter: Hörschler, Wolfram Johannes
(86) Internationale Anmeldenummer: PCT/DE2002/004477
(87) Internationale Veröffentlichungsnummer: WO 2003/104632

(56) Entgegenhaltungen:
- DE-A- 10 055 397
- US-A- 2 529 572
- US-A- 4 943 404
- PATENT ABSTRACTS OF JAPAN vol. 1996, no. 05, 31. Mai 1996 (1996-05-31) & JP 08 014407 A (FUJI OOZX INC), 16. Januar 1996 (1996-01-16)

## Beschreibung

### Technisches Gebiet

Bei Verbrennungskraftmaschinen kommen im Saugrohrtrakt Drosselverstellvorrichtungen zum Einsatz, mit denen das von der Verbrennungskraftmaschine benötigte Luftvolumen zur Verbrennung des Kraftstoffes reguliert werden kann. Die Drosselverstellvorrichtung umfasst in der Regel einen Antrieb, die an einer Welle aufgenommene Drosselklappe sowie ein zweiteiliges Drosselgehäuse, welches aus Metallguss gefertigt oder als Kunststoffspritzteil ausgebildet sein kann. Am Drosselgehäuse wird zudem vielfach ein separater Gehäusedeckel vorgesehen, mit welchem das Gehäuse zum Schutz gegen Ansaugen von Fremdluft abgedichtet werden kann. Zur Versteifung umfassen die eingesetzten Drosselklappen in der Regel eine angespritzte Verrippung.

### Stand der Technik

DE 43 29 522 A1 hat eine Drosseleinrichtung zum Gegenstand, welche im Ansaugkanal einer Brennkraftmaschine eingebaut wird. Die Drosseleinrichtung besteht aus einem Gehäuse, einer Drosselklappenansteuerung, einem Positionsdetektor, einer an einer Drossenklappenwelle befestigten Drosselklappe, wobei die Drosseleinrichtung zwischen dem reinluftseitigen Luftfilteranschluss und der Sauganlage der Brennkraftmaschine angeordnet ist. Der Luftfilteranschluss und/oder die Sauganlage bestehen aus einem Kunststoff wobei die einzelnen Elemente der Drosseleinrichtung modular aufgebaut sind und über Steck-, Schraub- oder Spannverbilldungen miteinander fügbar sind. Gehäuse und/oder die Drosselklappe können aus Kunststoff bestehen. Die Drosselklappenwelle ist zweiteilig aufgebaut. Auf einer Wellenhälfte der Drosselklappenwelle kann das Modul für den Lagesensor und auf der anderen Wellenhälfte das Modul für die Drosselklappenverstelleinheit angeordnet werden. Stelleinheit, Stellsensor, Drosselklappe und Drosselklappenwelle bilden eine gemeinsame Einheit.
WO 59 2493 A1 hat einen aus Kunststoff bestehenden Formkörper zum Gegenstand. Aus dieser Veröffentlichung ist ein aus Kunststoff bestehender, insbesondere im Spritzgießverfahren hergestellter Formkörper bekannt, sowie ein Drosselklappengehäuse mit einer Wandung, die mit einer Innenwandfläche einen Hohlraum begrenzt, In der Wandung ist zumindest an der dem Hohlraum zugewandten Innenwandfläche ein vom Kunststoffmaterial bedecktes Einlegeteil angeordnet. Das Einlegeteil ist derart gegenüber der Normalebene ge-WO 59 2493 A1 hat einen aus Kunststoff bestehenden Formkörper zum Gegenstand. Aus dieser Veröffentlichung ist ein aus Kunststoff bestehender, insbesondere im Spritzgießverfahren hergestellter Formkörper bekannt, sowie ein Drosselklappengehäuse mit einer Wandung, die mit einer Innenwandfläche einen Hohlraum begrenzt. In der Wandung- st zumindest an der dem Hohlraum zugewandten Innenwandfläche ein vom Kunststoffmaterial bedecktes Einlegeteil angeordnet. Das Einlegeteil ist derart gegenüber der Normalebene geneigt, dass es zu einer im Hohlraum angeordneten, schwenkbaren Drosselklappe, die zur Leistungssteuerung einer Verbrennungskraftmaschine dient, in deren Leerlaufstellung fluchtend verläuft Das Einlegeteil kann aus metallischem Werkstoff, beispielsweise einem Blech bestehen.Bei einer anderen Art der Droselklappenbefertigung wird die Drosselklappe und die welle mittels Spezialklebstoff miteinander verbinden, Z.B., in DE 100 55 397.

DE 195 25 510 A1 hat eine Drosselklappenstelleinheit zum Gegenstand. Die Drosselklappenstelleinheit umfasst eine an einer in einem Drosselklappenstutzen drehbar gelagerten Drosselldappenwelle befestigte Drosselklappe. Ferner ist ein mit der Drosselklappenwelle gekoppelter, am Drossenklappenstutzen gelagerte Stellmotor zum Verstellen der Drosselklappenwelle vorgesehen. Dieser umfasst mindestens einen Schleifer und mindestens eine Potentiometerbahn zum Erfassen einer Stellposition der Drosselklappenwelle sowie einen elekctrischen Anschluss. An diesem ist innerhalb eines Anschlussraumes der Stellmotor und ein Potentiometer angeschlossen. Ferner ist ein den Anschlussraum abschließendes Dekkelelement vorgesehen. Die mindestens eine Potentionmeterbahn ist am Deckel angebracht, wobei am Deckel ein zum elektrischen Anschluss gehörendes Kupplungsteil angeformt wird.

DE 199 14 994 A1 hat einen spritzgegossenen Drosselkörper zum Gegenstand. Die Drosselplatte mit Welle und einer Hebeleinheitsbaugruppe beinhaltet ein zentrales Plattenteil, Lagerteile sowie ein Drosselkabelverbindungsteil und ein Ende eines Positionssensors. Das Plattenbauchteil ist in seinem zentralen Teil verstärkt ausgebildet und verjüngt sich nach aussen hin zu den Randteilen. Eine Anzahl von verstärkenden Rippen wird auf der oberen und unteren Oberfläche des Plattenteiles angeformt. Das Profil dieser Rippen sorgt für einen verbesserten Luftstrom über der Oberfläche der Platte zur Erhöhung zur Verbesserung der Strömungsführung, Die Rippen dienen andererseits der Verstärkung bzw. Versteifung der Drosselplatte.

### Darstellung der Erfindung

Mit der erfindungsgemäß vorgeschlagen Lösung wird eine Drosselklappe, die hinsichtlich ihrer Biegefestigkeit optimiert ist, bereitgestellt. Die erfindungsgemäß vorgeschlagene Drosselklappe lässt sich als Spritzgießbauteil besonders einfach herstellen, da keine das Verfließen des Kunststoffmateriales innerhalb der Form behindernden Verrippungen erforderlich sind. Die Kunststoffschmelze kann ungehindert innerhalb des Hohlraumes der Form verfließen. Durch die Gestaltung des im Spritzgießverfahren gefertigten Drosselklappe wird eine hinsichtlich ihrer Biegefestigkeit optimierte Drosselklappe erhalten. Anstelle von Verstärkungsrippen wird an der Drosselklappe eine gezielte Ausformung erzeugt, die an der Anströmseite der Drosselklappe im Ansaug-/Aufladetrakt der Verbrennungskraftmaschine eine Ausbauchung aufweist und an der Abströmseite durch eine Hohlkehle gekennzeichnet ist. Dadurch wird an der Drosselklappe parallel zur Symmetrieachse, die mit der Schwenkachse der Drosselklappe zusammenfällt, eine Versteifung erzielt, die eine Rippenstruktur an der Oberseite bzw. der Unterseite der Klappenflächen überflüssig macht.

Die im Querschnitt der Drosselklappe gesehen als Wölbung in der Klappenfläche ausbildbare Ausformung der Drosselklappe umfasst Übergangsbereiche, die sich in radiale Richtung der Klappenfläche erstrecken. Diese Übergangsbereiche sind durch kontinuierlich zunehmende bzw. kontinuierlich abnehmende Krümmungsradien gekennzeichnet. Dadurch entsteht in der Klappenfläche eine gleichmäßige, die Strömung begünstigende Ausformung, in deren Mitte der maximale Krümmungsradius zwischen den beide erwähnten Übergangsbereichen liegt.

In fertigungstechnisch besonders vorteilhafte Beweise lassen sich an der Drosselklappe zwei Zapfen in einem Fertigungsvorgang anspritzen. Diese an zwei Anschlußstellen an der Klappenfläche angespritzten Zapfen bilden Lagerungsstelle für die Drosselklappe in der Wandung eines Strömungskanales wie z. B eines Ansaugluftkanales im Ansaugtrakt bzw. zwischen einem Ladeluftkanal im Ladelufttrakt einer Verbremiungskraftmaschine. Die Zapfen liegen koaxial zur Symmetrieachse der Drosselklappe, so dass auf eine durchgehende Drosselklappenwelle verzichtet werden kann; die Versteifung der Klappenfläche in der Mitte des Strömungskanals wird dort durch eine Ausformung der Klappenfläche erreicht. Eine durchgängige Drosselklappenwelle kann mit der erfindungsgemäßen Lösung umgangen werden. Um eine gleichmäßige Stärke der Drosselldappenfläche zu erreichen, können in den Formenhälften der Spritzgießformen für die Drosselklappen als Vertiefungen ausgebildete Fließhilfen angeordnet sein, mit deren Hilfe ein gleichmäßigeres Verfließen der Kunststoffschmelze vom Anspritzpunkt bis zu den von diesen auch weit entfernten Endbereichen am Umfang der Klappenfläche herbeigeführt werden kann.

### Zeichnung

Anhand der Zeichnung wird die Erfindung nachfolgend eingehender-beschrieben.

Es zeigt:
Figur 1 die perspektivische Draufsicht auf eine erfindungsgemäß geformte Drosselklappe,
Figur 2 eine perspektivische Unteransicht auf eine erfindungsgemäß geformte Drosselklappe mit Hohlkehle,
Figur 3 eine Seitenansicht einer leicht gekippten Drosselklappe gemäß der vorliegenden Erfindung,
Figur 4 die Seitenansicht der erfindungsgemäßen Drosselklappe,
Figur 5 die Draufsicht auf die Drosselklappe gemäß Figur 1,
Figur 6 den Schnittverlauf VI - VI gemäß Figur 5 und
Figur 7 den Schnittverlauf VII - VII gemäß Figur 5.

### Ausführungsvarianten

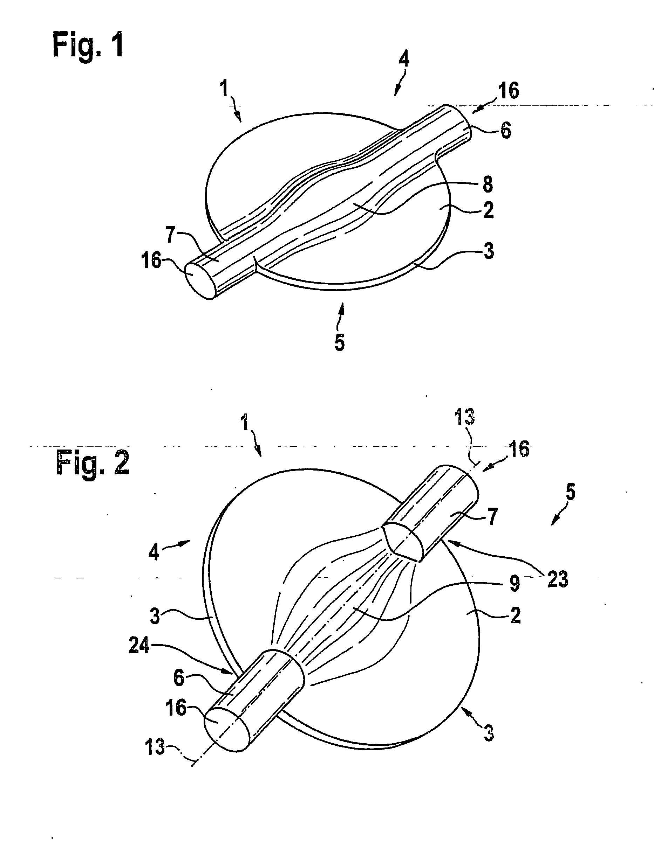

Der Darstellung gemäß Figur 1 ist die perspektivisch wiedergegebene Draufsicht auf eine erfindungsgemäß geformte Drosselklappe zu entnehmen.

In Figur 1 ist eine Drosselklappe 1 dargestellt, an deren Klappenfläche 2 jeweils ein erster Zapfen 6 und zweiter Zapfen 7 angespritzt sind. In der Klappenfläche 2 der Drosselklappe 1 ist eine Ausformung 8 ausgebildet. Die Ausformung 8 kann sich koaxial oder auch versetzt in Bezug auf den ersten Zapfen 6 und den zweiten Zapfen 7 verlaufend in der Klappenfläche 2 der Drosselklappe 1 erstrecken. In Bezug auf eine Anströmseite 4 der Drosselklappe 1 im Figur 1 nicht dargestellten Ansaug-/Aufladetrakt einer Verbrennungslcraftmaschine, ist die Ausformung 8 als Wölbung oder Ausbauchung ausgebildet, die auf einer Abströmseite 5, d. h. der Unterseite der Drosselklappe 1 gemäß der darstellenden Figur 1 in Figur 1 nicht dargestellte Hohlkehle aufweist (vergleiche Figur 2). Die in Figur 1 dargestellte Drosselklappe 1 kann sowohl stromaufwärts vor einer Brennkraftmaschine, d.h. auf deren ansaugseitiger Seite eingesetzt werden als auch stromabwärts hinter der Brennkraftmaschine, d.h. im Abgastrakt oder auch im Rahmen einer Luft- bzw. Abgasrückführung in den Ansaug-/Anfladetrakt einer Brennkraftmaschine.

Die sich beiderseits der Ausformung 8 erstreckenden Bereiche der Klappenfläche 2 sind durch eine Umrandung 3 begrenzt, welche sich je nach Anstellung der Drosselklappe 1 innerhalb eines Ansaugluftkanals im Ansaugtrakt bzw. innerhalb eines Ladeluftkanals im Aufladetrakt einer Verbrennungskraftmaschine an die Wandung eines die Drosselklappe 1 umgebenden Strömungskanals einstellt und dementsprechend eine Luftspalt freigibt oder verschließt, über den die Verbrennungsluft bzw. die Ladeluft der Verbrennungskraftmaschine zugeführt wird. Der Vollständigkeit halber sei erwähnt, dass der erste Zapfen 6 bzw. der zweite Zapfen 7 eine Stirnseite 16 umfasst. Am ersten Zapfen 6 kann ein Drehwinkelgeber für die Drosselklappe 1 aufgenommen sein, während über den zweiten Zapfen 7 die Schwenkbewegung in die Drosselklappe 1 eingeleitet wird, so beispielsweise über einen pneumatisch oder elektrisch antreibbaren Stellantrieb, der in Figur 1 jedoch nicht dargestellt ist. Der Drehwinkelgeber und der Stellantrieb können auch gemeinsamen am ersten Zapfen 6 sowie gemeinsam am zweiten Zapfen 7 der Drosselklappe 1 angeordnet werden.

Figur 2 ist eine perspektivische Unteransicht auf eine erfindungsgemäß geformte Drosselklappendarstellung der Hohlkehle zu entnehmen.

Aus der Darstellung gemäß Figur 2 geht hervor, dass der erste Zapfen 6 bzw. der zweite Zapfen 7 an einer ersten Anschlußstelle 23 bzw. an einer zweiten Anschlußstelle 24 im äußeren Randbereich der Drosselldappenfläche 2 angespritzt sind. Der erste Zapfen 6 bzw. der zweite Zapfen 7 liegen in Bezug auf eine Symmetrieachse 13, die mit der Schwenkachsen der Drosselklappen 1 zusammenfällt, beabstandet voneinander und bilden die Lagerungstellen, in denen die Drosselklappe 1 in der Wandung eines Ladeluftkanals bzw. eines Ansaugluftkanals einer Verbrennungskraftmaschine schwenkbar aufgenommen ist. Der erste Zapfen 6 und der zweite Zapfen 7 liegen in Bezug auf die Symmetrieachse 13 der Drosselklappe 1 fluchtend zueinander. Während aus Figur 1 die konvex gekrümmte Ausbauchung zwischen dem ersten Zapfen 6 und dem zweiten Zapfen 7 an der Anströmseite 4 der Drosselldappe 1 dargestellt ist, lässt sich Figur 2 die auf der Abströmseite 5 der Drosselklappe 1 liegende Hohlkehle 9, die durch die einander zuweisenden Stirnseiten des ersten Zapfens 6 bzw. des zweiten Zapfens 7 begrenzt ist, entnehmen. Die Hohlkehle 9 bildet die Rückseite der Ausformung 8 gemäß der Darstellung in Figur 1. Die Hohlkehle 9 erstreckt sich im Wesentlichen parallel zur Symmetrieachse 13 der Drosselklappe 1, die gleichzeitig deren Schwenkachse und den ersten Zapfen 6 bzw. den zweiten Zapfen 7 bildet. Die Klappenfläche 2 der Drosselklappe 1 ist durch die Umrandung 3 begrenzt, die sich in Schließstellung der Drosselklappe 1 im Ansaug- bzw. im Ladeluftkanal einer Verbrennungskraftmaschine an die Wandung des jeweiligen Kanals anliegt und diesen verschliesst; in einer um 90° zu Fließstellung orientierten Position der Drosselklappe 1 im Ansaug- bzw. im Ladeluftkanal der Verbrennungskraftmaschine gibt die Drosselklappe fast den gesamten Strömungsquerschnitts des Ansaugluft- bzw. Ladeluftkanales der Verbrennungskraftmaschine frei.

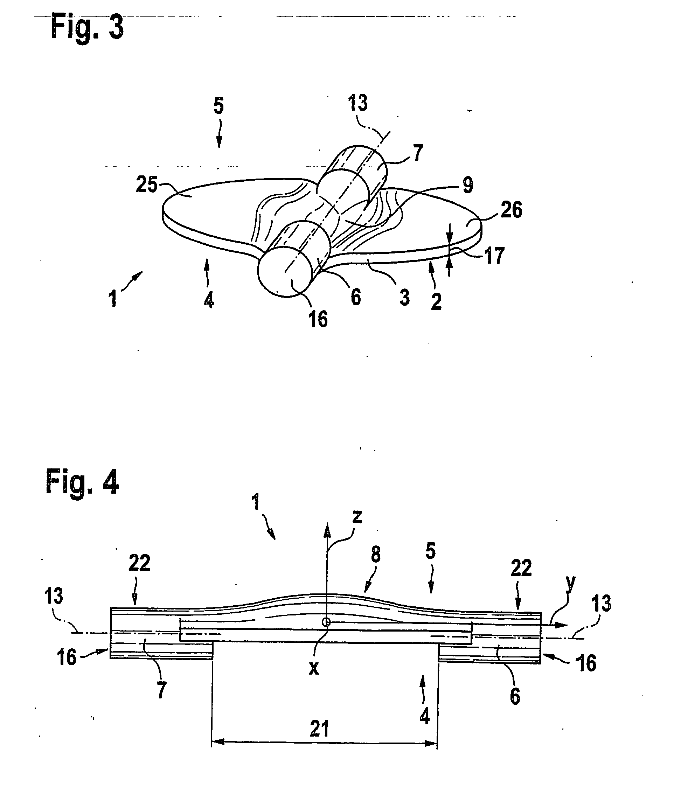

Figur 3 ist die Seitenansicht einer leicht gekippten Drosselklappe gemäß der vorliegenden Erfindung zu entnehmen.

Aus Figur 3 geht hervor, dass sich beidseits zur Hohlkehle 9 auf der Abströmseite Sein erster Flächenbereich 25 sowie ein zweiter Flächenbereich 26 erstrecken. Der erste Flächenbereich 25 sowie der zweite Flächenbereich 26 stehen über das durch die Hohlkehle 9 verformte Material der Klappenfläche in Verbindung miteinander, wobei die Materialstärke 17 im Bereich des ersten Flächenbereiches 25, innerhalb des zweiten Flächenbereiches 26 sowie im Bereich der Ausformung 8 bzw. 9 im Wesentlichen gleich ist. Die im Wesentlichen plan ausgebildeten ersten und zweiten Flächenbereiche 25, 26 gehen im Bereich der Hohlkehle 9, d. h. im Bereich der Ausformung an der Klappenfläche 2 der Drosselklappe 1, ineinander über und bilden eine hinsichtlich der Biegefestigkeit des erfindungsgemäß vorgeschlagenen Drosselklappenelements 1 wirkende Versteifung. Die Ausformung 8 bzw. 9 zwischen dem ersten Flächenbereich 25 und dem zweiten Flächenbereich 26 erlaubt den Verzicht auf eine durchgängige Drosselklappenwelle, da die Versteifung hinsichtlich des auf dem wahren Biegemomentes des ersten Flächenbereiches 25 bzw. des zweiten Flächenbereiches 26 der Klappenfläche 2 durch die Ausformung 8, 9 aufgebracht wird und demnach die Ausbildung einer durchgängigen Drosselklappenwelle obsolet macht.

Aus der Darstellung gemäß Figur 4 ist die Seitenansicht der erfindungsgemäßen Drosselklappe zu entnehmen. Die Drosselklappe 1 wird bevorzugt als ein Spritzgießbauteil in einem Arbeitsgang innerhalb eines Formwerkzeuges gefertigt. Das Verfließen der Kunststoffschmelze innerhalb des geschlossenen Formwerkzeuges kann durch Fließhilfen unterstützt werden. Um ein Verfließen der fließfähigen Kunststoffschmelze innerhalb der geschlossenen Formenteile einer Spritzgießform zu gewährleisten, insbesondere ein Verfließen der Kunststoffschmelze in die Randbereiche der Klappenfläche 2 der Drosselklappe 1, können in der konvex ausgebildeten Ausformung 8 im Flächenbereich 2 eine oder mehrere rippenförmig ausgebildete Fließhilfen angebracht werden. Diese befinden sich innerhalb des Ausformungsbereiches in der Klappenfläche 2. Dazu können an den Spritzgießformen entsprechende Negativformen vorgesehen werden. Die Fließhilfen sind von der Anströmseite 4 des Flächenbereiches 2 aus nicht sichtbar. Diese durch das Vorsehen von Fließhilfen im Formwerkzeug ausgebildeten Rippen bieten eine zusätzliche Versteifung des Flächenbereiches 2, jedoch sind diese Verrippungen am Flächenbereich 2 nicht so stark ausgebildet, da die Versteifung hinsichtlich des Biegemomentes des Flächenbereiches 2 durch die konvex ausgebildete Ausformung 8 erheblich erhöht wird.

Innerhalb des geschlossenen Formwerkzeuges kann die in Figur 4 mit einem Koordinatensystem dargestellte Drosselklappe 1 in einem Arbeitsgang gefertigt werden. In einem Arbeitsgang lässt sich sowohl die Ausformung 8 bzw. 9 in der Klappenfläche 2 der Drosselklappe 1, erzeugen als auch der erste Zapfen 6 bzw. der zweite Zapfen 7 im Randbereich Drosselklappenfläche 2 an Anschlußstellen (vergleiche Darstellung gemäß Figur 2) anspritzen.

Aus der Darstellung gemäß Figur 4 geht hervor, dass die auf der Anströmseite 4 der Drosselklappe liegende Ausbauchung 8 oder Auswölbung einen Verlauf 28 aufweist. Der Wölbungs- bzw. Verformungsverlauf 28, der Ausformung 8 bzw. 9 an der Klappenfläche 2 findet ihr Maximum etwa in der Mitte der Drosselklappenfläche sich in Richtung Z-Achse erstreckend. Der Wölbungs- bzw. Verformungsverlauf 28 der Drosselklappe auf der Anströmseite 4 ist durch stetige Übergänge, die sich in Y-Richtung auf der Anströmseite 4 der Drosselklappenfläche erstrecken, gekennzeichnet. Die die Biegefestigkeit der erfindungsgemäß vorgeschlagenen Drosselklappe 1 beträchtlich erhöhende Ausformung verläuft parallel zur Symmetrieachse 13 der Drosselklappe 1, die ihrerseits mit der Schwenkachse der Drosselklappe zusammenfällt. Die auf der Abströmseite 5 liegende Hohlkehle 9, welche die Ausbauchung oder Wölbung 8 begrenzt, ist in Figur 4 nicht dargestellt. Aus Figur 4 geht ein Abstand 21 hervor, in welchem sich die einander zuweisenden Stirnseiten des ersten Zapfens 6 und des zweiten Zapfens 7 gegenüberliegen. Innerhalb des Abstandes 21 wird die hinsichtlich der auftretenden Biegemomente aufgrund der Anströmung der Drosselklappenfläche 1 erforderliche Festigkeit der Drosselklappe ausschließlich durch die Ausformung in der Klappenfläche 2 aufgebracht, ohne dass es einer Verrippung auf der Anströmseite 4 bzw. der Abströmseite 5 der Klappenfläche 2 bedarf. Die Umfangsflächen des ersten Zapfens 6 bzw. des zweiten Zapfens 7, in denen die erfindungsgemäß vorgeschlagene Drosselklappe der Wandung eines Ansaugluft- bzw. Ladeluftkanales aufgenommen wird, ist mit Bezugszeichen 22 bezeichnet, während die aussenseitigen Stirnseiten des ersten Zapfens 6 bzw. des zweiten Zapfens 7 durch das Bezugszeichen 16 gekennzeichnet sind. Senkrecht zur Zeichenebene gemäß Figur 4 erstreckt sich die X-Achse des in Figur 4 dargestellten Koordinatensystems in die Raumrichtungen x, y und z.

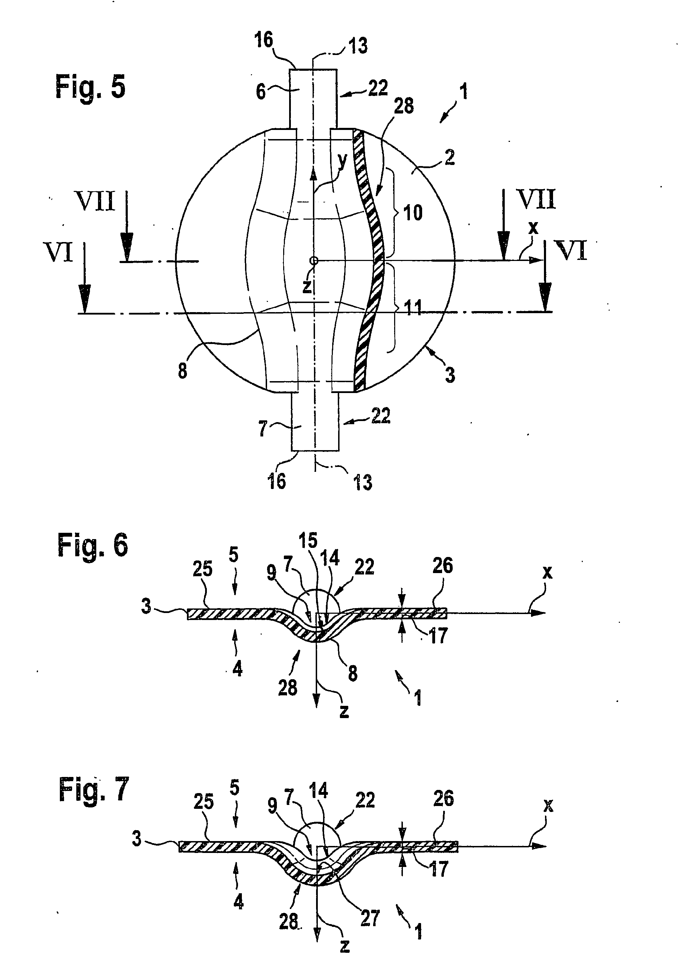

Figur 5 zeigt die Draufsicht auf die Drosselklappe gemäß Figur 1.

Die Z-Achse des Koordinatensystems in die Raumrichtungen X, Y und Z erstreckt sich senkrecht zur Zeichenebene, während der Verlauf der Y-Achse mit der Symmetrielinie 13 der Drosselklappe 1 zusammenfällt. Senkrecht zur Y-Achse erstreckt sich die X-Achse in radialer Richtung in Bezug auf die Klappenfläche 2 der Drosselklappe 1. Die Anspritzstelle für die im Flächenbereich 2 in konvexer Form ausgebildete Ausformung 8 fällt mit dem Ursprung der Z-Achse des Koordinatensystems zusammen. Von dieser Anspritzstelle aus verfließt die Kunststoffschmelze innerhalb des Formenwerkzeuges, unterstützt durch die im Formenwerkzeug ausgebildeten Fließhilfen in radiale Richtung und bildet den Flächenbereich 2 mit einer gewölbt geformten Ausformung 8 in durchgängig gleichmäßige Materialstärke.

Koaxial zu Symmetrielinie 13 der Drosselklappe 1 erstrecken sich der erste Zapfen 6 bzw. der zweite Zapfen 7, deren Stirnseiten jeweils mit Bezugszeichen 16 und deren Umfangsflächen mit Bezugszeichen 22 identifiziert sind. In die Zeichenebene gemäß Figur 5 ist ein Schnitt durch die Klappenfläche 2 der Drosselldappe 1 geklappt. Aus der Schnittdarstellung geht hervor, dass der Krümmungsradius der Ausformung 8 in Richtung des Mittelpunlctes der Klappenfläche 2, der mit der Z-Achse gemäß Figur 5 zusammenfällt stetig zunimmt, während der Krümmungsradius der Ausformung 8 der Klappenfläche 2 innerhalb des zweiten Übergangsbereiches 11 von der Z-Achse auf dem zweiten Zapfen 7, kontinuierlich abnimmt. Der maximale Krümmungsradius im Wölbungsverlauf 28 der Ausformung 8 fällt mit der aus der Zeichenebene herausragende Z-Achse zusammen (Vergleiche Darstellung gemäß Figur 7).

Der Darstellung gemäß Figur 5 ist entnehmbar, dass der Wölbungsverlauf 28 parallel zur Symmetrieachse 13 der Drosselklappe 1 liegt, wobei die Symmetrieachse 13 der Drosselklappe 1 gemäß der Darstellung in Figur 5 mit der Schwenkachse der Drosselklappenfläche 2 zusammenfällt. Die erhaben aus der Zeichenebene gemäß Figur 5 vorstehende Ausformung 8 ist in Bezug auf die axiale Streckung der Symmetrieachse 13 durch einen gleichmäßigen Verlauf gekennzeichnet, wobei die Ausformung 8 in Bezug auf die Symmetrielinie 13 der Drosselldappe 1 ihr Maximum im Bereich der aus der Zeichenebene gemäß Figur 5 herausragenden Z-Achse annimmt (vergleiche Darstellung gemäß Figur 4).

Der Darstellung gemäß Figur 6 ist der Schnittverlauf VI - VI gemäß Figur 5 zu entnehmen. Die Z-Achse des Koordinatensystems in die drei Raumrichtungen x, y, z verläuft senkrecht, während die X-Achse in die Horizontale reicht. Der in Figur 6 dargestellt Schnittverlauf durch die Klappenfläche 2 der Drosselklappe 1 gemäß Figur 5 verläuft durch den zweiten Übergangsbereich 11 gemäß der Darstellung in Figur 5. Aus der Darstellung gemäß Figur 6 geht hervor, dass die Materialstärke 17 in Richtung der X-Achse betrachtet, im ersten Flächenbereich 25 sowie im Bereich der Ausformung 8, 9 und innerhalb des zweiten Flächenbereiches 24 der Drosselklappe 1 im Wesentlichen konstant ist. Die durch die Stirnseite des zweiten Zapfens 7 begrenzte Hohlkehle 9 ist gemäß des Schnittverlaufes VI-VI in Figur 5 durch einen ersten Krümmungsradius 14 sowie durch einen weiteren Krümmungsradius 15 geprägt, der in der Schnittebene VI-VI liegt. Innerhalb der Schnittebene VI-VI ist der Krümmungsradius 15 der Hohlkehle 9 an der Abströmseite der Drosselldappe 1 größer als der erste Krümmungsradius 14 im Bereich der durch die Stirnseite des zweiten Zapfens begrenzte Hohlkehle 9. Der Verlauf des Krümmungsradius nimmt gleich der Darstellung gemäß Figur 5 von der der Z-Achse zuweisenden Stirnseite des zweiten Zapfens 7 kontinuierlich bis zur Schnittebene 7 gemäß der Darstellung in Figur 5 zu, um von dort kontinuierlich entlang der Y-Achse in Richtung auf die der Z-Achse zuweisende Stirnseite des ersten Zapfens 6 abzunehmen. Auf der Anströmseite 4 der Drosselklappe 1 gemäß der Darstellung in Figur 6 ist der Wölbungsverlauf durch das Bezugszeichen 28 gekennzeichnet. Der Wölbungsverlauf 28 nimmt im Bereich der Schnittebene durch eine halbkreisförmige Krümmung in der Plattenfläche der Drosselldappe 1 gekennzeichnet, die in der Schnittebene VI-VI durch den weiteren Krümmungsradius 15 definiert ist, welche in der Darstellung gemäß Figur 6 exemplarisch herausgegriffen wurde.

Figur 7 hat den-Schnittverlauf VII-VII gemäß der Draufsicht auf die Drosselklappe in Figur 5.

Aus dem in Figur 7 dargestellten Schnittverlauf VII-VII geht hervor, dass der Krümmungsradius der Hohlkehle 9 im Bereich der Z-Achse seinen maximalen Wert annimmt. Im Vergleich zum ersten Radius 14, welcher an der Stirnseite des zweiten Zapfens 7 liegt, beträgt der maximale Krümmungsradius 27 in der Darstellung gemäß Figur 7 beispielsweise das Doppelte des ersten Krümmungsradius 14. Demgemäß weist die Drosselklappe 1 auf der Anströmseite 4 die größte Verformung auf, d. h. der Wölbungsverlauf 28 der Klappenfläche der Drosselklappe 1 nimmt hier sein Maximum an. Aufgrund der in Figur 5 dargestellten Übergangsbereiche beiderseits der Position des maximalen Krümmungsradius 27 wird durch die Ausformung 8, 9 in der Klappenfläche der Drosselklappe 1 eine immense Biegesteifigkeitverbesserung der Drosselklappe 1 erreicht. Eine die Klappenfläche der Drosselklappe 1 versteifende, durchgängig verlaufende Drosselklappenwelle kann nunmehr entfallen, so dass die in Figur 5 dargestellten ersten Zapfen 6 bzw. zweiten Zapfen 7 als Lagerungsstellen für die erfindungsgemäß ausgeformte Drosselklappe 1 ausreichen.

Zwischen dem ersten Krümmungsradius 14 und dem maximalen Krümmungsradius 27 gemäß der Darstellung in Figur 7 verläuft der zweite Übergangsbereich 11, innerhalb dessen der Krümmungradius stetig von einem-dem ersten Krümmungsradius 14 entsprechenden Wert auf einen dem maximalen Krümmungsradius 27 entsprechenden Wert ansteigt, um innerhalb des ersten Übergangsbereiches 10 in Y-Richtung gesehen, kontinuierlich vom maximalen Krümmungsradius 27 wieder auf den ersten Krümmungsradius 14 an der der Z-Achse zuweisende Stirnseite- des ersten Zapfens 6 abzufallen. Durch die gewählte Kontur der Ausformung in der Klappenfläche der Drosselklappe 1 wird eine sich im Wesentlichen parallel zur Symmetrieachse 13 der Drosselklappe 1 erstreckende versteifende Struktur geschaffen. Die versteifende Wirkung der Ausformung 8, 9 in der Klappenfläche der Drosselklappe 1 macht Verstärkungsrippen auf der Anströmseite 4 bzw. der Abströmseite 5 der Drosselklappe 1 entbehrlich. Die Materialstärke 17 innerhalb des ersten Flächenbereiches 25, der im Wesentlichen plan verlaufend ausgebildet ist sowie der Ausformung 8, 9 in der Klappenfläche der Drosselklappe 1 und innerhalb des zweiten Flächenbereiches 26 im Wesentlichen konstant, so dass Materialanhäufungen sowohl in der Klappenfläche in alle drei Raumrichtungen x, y,- z minimiert werden. Die Klappenfläche 2 der Drosselklappe 1, die bevorzugt als Spritzgießbauteil gefertigt wird, ist von einer Umrandung 3 begrenzt, welche sich an die nicht dargestellte Wandung eines Ansaugluft- bzw. Aufladeluftkanals einer Verbrennungskraftmaschine je nach Schwenkposition der Drosselklappe um ihre Symmetrieachse 13, anschmiegt. Die Biegefestigkeit der erfindungsgemäß vorgeschlagenen Drosselklappe zum-Einsatz im Ansaug-/Ladelufttrakt einer hier nicht dargestellten Verbrennungskraftmaschine läßt sich durch die Formgebung der Ausformung 8 bzw. 9 sowie durch die Formgebung hinsichtlich des Wölbungsverlaufes 28 parallel zur Symmetrieachse 13 der Drosselklappe 1 beeinflussen. Die Übergangsbereiche 10 bzw. 11, beidseits der Z-Achse gemäß der Darstellung in Figur 5 können beispielsweise auch in größeren, als den in Figur 6 bzw. Figur 7 dargestellten Krümmungsradien ausgebildet werden. Eine Biegesteifigkeitsverbesserung des erfindungsgemäß vorgeschlagenen Drosselklappenelementes 1 kann auch durch die Auswahl des in das Formwerkzeug einzuspritzenden Kunststoffmaterials erfolgen. Ein gleichmäßiges Verfließen des als Kunststoffschmelze in das Formwerkzeug eingespritzten Kunststoffmaterials läßt sich durch im Bereich der Ausformung angeordnete Fließhilfen, die in Gestalt rippenförmiger Kanäle ausgebildet sein können, erreichen. Die Fließhilfen liegen auf der der Anströmseite 4 abgewandten Seite des Flächenbereiches 2 der Drosselklappe 1.

Während in den Figuren 5, 6 und 7 eine Formgebung der Ausformung 8 im Flächenbereich 2 der Drosselklappe 1 dargestellt ist, die Übergangsbereiche 10 bzw. 11 beidseits der Z-Achse enthält, kann die in der Klappenfläche 2 der Drosselklappe 1 konvex gewölbt ausgeführt Ausformung 8 auch-ohne Übergangsbereiche 10 bzw. 11 ausgebildet sein. In dieser Ausführungsvariante erstreckt sich die konvex gewölbte Ausformung 8 in der Klappenfläche 2 der Drosselklappe 1 über die gesamte Klappenfläche 2, ohne daß außer einem planen Ring am Rand der Klappenfläche 2 flache Flächenbereiche in der Klappenfläche 2 ausgebildet sind.

### Bezugszeichenliste

- 1 -: Drosselklappe
- 2: Klappenfläche
- 3: Umrandung
- 4: Anströmseite
- 5: Abströmseite
- 6: erster Zapfen
- 7: zweiter Zapfen
- 8: Ausbauchung/Wölbung
- 9: Hohlkehle
- 10: erster Übergangsbereich
- 11: zweiter Übergangsbereich
- 12: Drehsinn
- 13: Symmetrieachse
- 14: erster Krümmungsradius
- 15: zweiter Krümmungsradius
- 16: Stirnseite Zapfen 6, 7
- 17: Materialstärke
- 18: X-Achse
- 19: Y-Achse
- 20: Z-Achse (Anspritzstelle)
- 21: Abstand innere Zapfenstirnseiten
- 22: Umfangsfläche Zapfen 6, 7
- 23: erste Anschlußstelle
- 24: zweite Anschlußstelle
- 25: erster Flächenbereich (Plan)
- 26: zweiter Flächenbereich (Plan)
- 27: maximaler Krummungsradius
- 28: Ausformungsverlauf

## Patentansprüche

1. Drosselklappe zur Aufnahme an einer Verbrennungskraftmaschine mit einer ersten und einer zweiten Lagerungsstelle (6, 7) mit sich beidseits ihre Symmetrieachse (13) erstreckenden, im Wesentlichen Plan ausgebildeten Flächenbereichen (25, 26), die jeweils von einer Umrandung (3) begrenzt sind und die Drosselklappe um ihre Symmetrieachse (13) mittels eines Stellantriebes verstellbar ist, wobei die plan ausgebildeten Flächenbereiche (25, 26) durch eine gewölbt in der Fläche der Drosselklappe, parallel zu deren Symmetrieachse (13) verlaufende Ausformung (8, 9, 28) miteinander verbunden sind, **dadurch gekennzeichnet, dass** an einer Klappenfläche (2) ein erster Zapfen (6) und ein zweiter Zapfen (7) ausgeformt sind.

2. Drosselklappen nach Anspruch 1, **dadurch gekennzeichnet, dass** die Ausformung (8, 9, 28) einen ersten Übergangsbereich (10) und einen zweiten Übergangsbereich (11) umfasst.

3. Drosselklappe nach Anspruch 2, **dadurch gekennzeichnet, dass** die Ausformung (8, 9, 28) innerhalb der Übergangsbereich (10, 11) einen ansteigenden bzw. abfallenden Verlauf (28) des Krümmungsradius (14, 15, 27) aufweist.

4. Drosselklappe nach Anspruch 2, **dadurch gekennzeichnet, dass** die Ausformung (8, 9, 28) etwa in der Mitte zwischen dem Übergangsbereichen (10, 11) ihren maximalen Krümmungsradius (27) annimmt.

5. Drosselklappe nach Anspruch 2, **dadurch gekennzeichnet, dass** die Ausformung (8, 9, 28) auf der Anströmseite (4) der Drosselklappe einen gewölbten Bereich (8) und auf der Abströmseite (5) der Drosselklappe eine Hohlkehle (9) aufweist.

6. Drosselklappe nach Anspruch 1, **dadurch gekennzeichnet, dass** die Materialstärke (17) der Klappenfläche (2) der Drosselklappe innerhalb der plan verlaufenden Flächenbereiche (25, 26) und der Ausformung (8, 9, 28) im Wesentlichen konstant ist.

7. Drosselklappe nach Anspruch 1, **dadurch gekennzeichnet, daß** eine Anspritzstelle für fließfähige Kunststoffschmelze im Ursprung eines in der Klappenfläche (2) aufgespannten Koordinatensystems (X, Y, Z) liegt.

8. Drosselklappe nach Anspruch 1, **dadurch gekennzeichnet, dass** sich die Zapfen (6, 7) an der Klappenfläche (2) parallel zur Symmetrieachse (13) erstrecken.

9. Drosselklappe nach Anspruch 1, **dadurch gekennzeichnet, dass** die Zapfen (6, 7) die Ausformung (8, 9, 28) begrenzen und ihre der Ausformung (8, 9, 28) zuweisenden Stirnseiten einen Abstand (21) voneinander aufweisen.

10. Drosselklappe nach Anspruch 1, **dadurch gekennzeichnet, dass** die Ausformung (8, 9, 28) sich durchgängig mit einer konstanten Wölbung parallel zur mit der Schwenkachse zusammenfallenden Symmetrieachse (13) der Drosselklappe erstreckt.

11. Drosselklappe nach Anspruch 1, **dadurch gekennzeichnet, daß** diese als Spritzgießbauteil beschaffen ist.

## Claims

1. Throttle flap for being installed on an internal combustion engine, having a first and a second bearing point (6, 7) with substantially planar surface regions (25, 26) which extend to both sides of the axis of symmetry (13) of said throttle flap, which surface regions (25, 26) are in each case delimited by a border (3), and the throttle flap (3) can be adjusted about its axis of symmetry (13) by means of an actuating drive, with the planar surface regions (25, 26) being connected to one another by means of a moulded portion (8, 9, 28) which runs in a convex fashion in the surface of the throttle flap and parallel to the axis of symmetry (13) of said throttle flap (13), **characterized in that** a first pin (6) and a second pin (7) are formed on a flap surface (2).

2. Throttle flap according to Claim 1, **characterized in that** the moulded portion (8, 9, 28) comprises a first transition region (10) and a second transition region (11).

3. Throttle flap according to Claim 2, **characterized in that** the moulded portion (8, 9, 28) has a rising and falling profile (28) of the radius of curvature (14, 15, 27) within the transition region (10, 11).

4. Throttle flap according to Claim 2, **characterized in that** the moulded portion (8, 9, 28) assumes its maximum radius of curvature (27) approximately in the centre between the transition regions (10, 11).

5. Throttle flap according to Claim 2, **characterized in that** the moulded portion (8, 9, 28) has a convex region (8) on the approaching-flow side (4) of the throttle flap and a groove (9) on the flow-off side (5) of the throttle flap.

6. Throttle flap according to Claim 1, **characterized in that** the material thickness (17) of the throttle flap is substantially constant within the planar surface regions (25, 26) and the moulded portion (8, 9, 28).

7. Throttle flap according to Claim 1, **characterized in that** an injection point for plastic melt which is capable of flow is situated at the origin of a coordinate system (X, Y, Z) which is spanned in the flap surface (2).

8. Throttle flap according to Claim 1, **characterized in that** the pins (6, 7) on the flap surface (2) extend parallel to the axis of symmetry (13).

9. Throttle flap according to Claim 1, **characterized in that** the pins (6, 7) delimit the moulded portion (8, 9, 28) and their end sides which point towards the moulded portion (8, 9, 28) are at a distance (21) from one another.

10. Throttle flap according to Claim 1, **characterized in that** the moulded portion (8, 9, 28) extends continuously with a constant convexity parallel to the axis of symmetry (13), which coincides with the pivot axis, of the throttle flap.

11. Throttle flap according to Claim 1, **characterized in that** said throttle flap is formed as an injection-moulded part.

## Revendications

1. Volet d'étranglement destiné à un moteur à combustion interne comportant un premier palier et un second palier (6, 7), avec des zones de surface (25, 26) pratiquement planes, s'étendant de part et d'autre de son axe de symétrie (13), et délimitée chacune par une périphérie (3), le volet d'étranglement étant réglable autour de son axe de symétrie (13) par un moyen d'entraînement,
les zones de surface (25, 26) de forme plane étant reliées par une déformation (8, 9, 28) bombée dans la surface du volet d'étranglement, parallèle à l'axe de symétrie (13),
**caractérisé en ce que**
la surface (2) du volet comporte un premier tourillon (6) et un second tourillon (7).

2. Volet d'étranglement selon la revendication 1,
**caractérisé en ce que**
la déformation (8, 9, 28) comporte une première zone transitoire (10) et une seconde zone transitoire (11).

3. Volet d'étranglement selon la revendication 2,
**caractérisé en ce que**
la déformation (8, 9, 28) présente un tracé croissant ou décroissant (28) pour le rayon de courbure (14, 15, 27) dans la zone transitoire (10, 11).

4. Volet d'étranglement selon la revendication 2,
**caractérisé en ce que**
la déformation (8, 9, 28) possède son rayon de courbure (27) maximum sensiblement au milieu entre les zones transitoires (10, 11).

5. Volet d'étranglement selon la revendication 2,
**caractérisé en ce que**
la déformation (8, 9, 28) présente une zone bombée (8) sur le côté amont (4) du volet d'étranglement et une cavité (9) sur le côté aval (5) du volet d'étranglement.

6. Volet d'étranglement selon la revendication 1,
**caractérisé en ce que**
l'épaisseur (17) de la matière de la surface (2) du volet d'étranglement dans la zone de surface plane (25, 26) et dans la déformation (8, 9, 28) est pratiquement constante.

7. Volet d'étranglement selon la revendication 1,
**caractérisé en ce que**
le point d'injection de la matière plastique fondue, fluide se situe à l'origine d'un système de coordonnées (X, Y, Z) sous-tendu par la surface (2) du volet.

8. Volet d'étranglement selon la revendication 1,
**caractérisé en ce que**
les tourillons (6, 7) s'étendent parallèlement à l'axe de symétrie (13) sur la surface (2) du volet.

9. Volet d'étranglement selon la revendication 1,
**caractérisé en ce que**
les tourillons (6, 7) limitent la déformation (8, 9, 28) et leurs faces frontales tournées vers la déformation (8, 9, 28) sont écartées de la distance (21).

10. Volet d'étranglement selon la revendication 1,
**caractérisé en ce que**
la déformation (8, 9, 28) est continue avec une courbure constante parallèle à l'axe de symétrie (13) du volet d'étranglement qui coïncide avec son axe de basculement.

11. Volet d'étranglement selon la revendication 1,
**caractérisé en ce qu'**
il est réalisé sous la forme d'une pièce injectée.
